# EUROPÄISCHE PATENTSCHRIFT

(11) **EP 0 428 782 B1**
(45) Veröffentlichungstag und Bekanntmachung des Hinweises auf die Patenterteilung: **01.06.1994**
(21) Anmeldenummer: 89121648.3
(22) Anmeldetag: 23.11.1989
(51) Int. Cl.: H02B 1/044

(54) **Elektrisches Gerät, insbesondere Befehls- oder Meldegerät**
Electrical device, in particular control or signalling device
Appareil électrique, en particulier de commande ou de visualisation

(43) Veröffentlichungstag der Anmeldung: 29.05.1991
(73) Patentinhaber: SQUARE D COMPANY (DEUTSCHLAND) GMBH, 51709 Marienheide (DE)
(72) Erfinder: Ludwig, Bernd, D-5277 Marienheide (DE); Kleine, Heinz, D-5277 Marienheide (DE)
(74) Vertreter: Köhne, Friedrich, Dipl.-Ing.

(56) Entgegenhaltungen:
- EP-A- 0 074 427
- EP-A- 0 257 208
- DE-A- 2 623 647
- FR-A- 2 235 510

## Beschreibung

Die Erfindung bezieht sich auf ein elektrisches Gerät, insbesondere Befehls- oder Meldegerät, welches zur Befestigung an einer mit einer Bohrung versehenen Montageplatte bestimmt ist, wobei das zylindrische Einsatzgehäuse des Gerätes auf dem Umfang eine Rippe mit mindestens einer Sollbruchstelle nahe der Gehäuseoberfläche aufweist, so daß zum wahlweisen Einsatz des Gerätes in eine Bohrung, die am Rande mit einer Nut versehen ist, die Rippe in die Nut eingreift oder bei Einsatz in eine Bohrung, die keine Nut aufweist, die Rippe an der Sollbruchstelle abbrechbar ist.

Aus der EP-B-0 074 427 ist eine Vorrichtung zum Befestigen eines elektrischen Gerätes, insbesondere eines Nockenschalters, an einer Montageplatte bekannt. Hierbei ist es herkömmliche Technik, daß diese elektrischen Geräte einzeln oder meist in Reihen neben- und / oder übereinander auf Montageplatten dadurch befestigt werden, daß ein Teil des Gerätes mit den Bedienungs- oder Anzeigeelementen aus der Vorderseite der Montageplatte hervorragt, während der eigentliche Schaltteil des Gerätes mit den elektrischen Anschlüssen und der Verdrahtung auf der Rückseite der Montageplatte angeordnet ist. Die hier angesprochenen Geräte werden in der Fachwelt als Befehls- und Meldegeräte bezeichnet. Dazu gehören insbesondere Drucktastenschalter, Nockenschalter und Leuchtmelder, d. h. Anzeigegeräte, die durch Aufleuchten einer Lampe einen bestimmten Schaltzustand anzeigen.

Zum Befestigen der Geräte weist die Montageplatte entsprechende Bohrungen auf. Es ist vielfach üblich, so auch beim vorerläuterten Stand der Technik, daß die Bohrung an einer bestimmten Stelle des Randes eine meist rechteckige Nut aufweist, in die eine massive Rippe eingreift, die auf dem Umfang des Teiles des Einsatzgehäuses einstückig mit diesem angeformt ist, der innerhalb der betreffenden Bohrung der Montageplatte zu liegen kommt. Diese in sehr hohen Stückzahlen realisierte Konstruktion hat sich in der Praxis an sich sehr gut bewährt, weil sie einerseits eine Montageerleichterung für den richtigen Sitz und eine richtige Stellung des Gerätes bietet. Zum anderen ist das Gerät verdrehungssicher gehalten, was besonders wichtig ist bei Geräten, die auf Drehung beansprucht werden, so zum Beispiel Nockenschalter, die mit einem drehbaren Betätigungsgriff versehen sind.

Die vorerläuterte Konstruktion ist dabei in manchen Anwendungsgebieten und vor allem beim Massenexport in einige andere Länder nicht anwendbar, weil es dort nicht üblich ist, die Bohrungen bzw. Löcher in der Montageplatte mit einer Nut zu versehen. In diesen Fällen ist es natürlich nicht praktikabel, jeweils vor dem Einbau der einzelnen Geräte nachträglich eine Nut durch Feilen oder Fräsen von Hand vorzusehen. Andererseits ist es bei einer Massenherstellung aus Fertigungsgründen auch nicht möglich, von vornherein zwei Sorten von Geräten herzustellen und auszuliefern, nämlich die eine mit einer Rippe für die Nutbefestigung und eine andere ohne Rippe. Wenn die elektrischen Geräte mit ihre Vorsätzen, die eine massive Rippe aufweisen, in Bohrungen bzw. Löcher ohne Nut eingebaut werden, so werden die Gerätegehäuse zumindest stellenweise so deformiert, daß die Gerätefunktion gestört ist. Bisher war es deshalb erforderlich, die Rippe vor dem Einbau zu entfernen. Diese Arbeit ist mühsam und zeitraubend, wenn man bedenkt, daß es sich um ein zähhartes Kunststoffmaterial handelt, das nicht ohne weiteres abgeschnitten werden kann. Beim Abbrechen können sich Beschädigungen an der Gehäusewand des Gerätes ergeben. Außerdem sind die Geräte an der betreffenden Stelle mit stramm sitzenden Dichtungen versehen, die vorher zurückgeschoben werden müssen. Es besteht dann immer die Gefahr, daß die Dichtung beschädigt wird oder nicht mehr in die vorherige richtige Lage zurückgebracht wird, so daß die vorgeschriebene Schutzart nicht mehr gewährleistet ist. Es wurde zwar bereits vorgeschlagen, an der Anschlagfläche eines Gehäusevorsatzes einen achsparallel verlaufenden Positionierpin anzubringen, der in dem einen Fall in die Nut eingreift und im anderen Fall, wenn keine Nut vorhanden ist, einfach abgebrochen wird. Bei dieser Konstruktion ergibt sich aber keine ausreichende Verdrehfestigkeit, weil der Positionierpin dann auch bei normalem Betrieb und bei Drehbeanspruchung gebogen, abgebrochen oder abgeschert wird.

Aus den zuvor erläuterten Gründen wird bei der Erfindung von einem zu Anfang angegebenen elektrischen Gerät ausgegangen, welches aus der EP-A-0 257 208 bekannt ist. Dieses Gerät besitzt einen Kopfteil für Befehls- und / oder Meldegeräte für den Frontplatteneinbau. Eine Hülse dieses Kopfteiles ist mit einer Verdrehsicherung in Form einer Haltenase versehen, die in eine entsprechende Nut benachbart zur Bohrung der Frontplatte eingesetzt ist. Die Haltenase ist beidseitig mit einer vorgeprägten Kerbe versehen, so daß die Haltenase infolge der Kerben leicht abbrechbar ist, wenn sie nicht benötigt wird. Diese Kerben verlaufen jedoch achsparallel zur Hülse. Das Abbrechen der Haltenase kann also nur durch Kraftanwendung in tangentialer Richtung zur Hülse bzw. in einer Ebene senkrecht zur Hülsenachse erfolgen. Es besteht deshalb die Gefahr, daß die Haltenase auch dann abbrechen kann, wenn das Kopfteil einer Drehbeanspruchung, die Haltenase damit einer Scherbeanspruchung unterworfen wird, so daß in der Praxis keine ausreichende Verdrehsicherung gegeben ist.

Der Erfindung liegt demgegenüber die Aufgabe zu Grunde, ein elektrisches Gerät zu schaffen, welches bei Aufrechterhaltung des Vorteiles einer einheitlichen Fertigung zur Befestigung an einer Montageplatte sowohl mit Nut als auch ohne Nut einerseits eine große Scherfestigkeit aufweist und andererseits das Abbrechen der Rippe in radialer oder axialer Richtung erleichtert.

Die gestellte Aufgabe wird erfindungsgemäß dadurch gelöst, daß die Rippe wenigstens aus einem einstückig mit dem zylindrischen Einsatzgehäuse verbundenen Schenkel besteht, der aus dem Umfang des Einsatzgehäuses radial nach außen ausragt, daß die Breite des Schenkels in tangentialer Richtung groß genug ist, um eine ausreichende Scherfestigkeit und damit Drehsicherheit zu erzielen, und daß die Dicke des Schenkels in axialer Richtung im Bereich der Sollbruchstelle viel kleiner als seine Breite in tangentialer Richtung ist, so daß die Rippe bei Kraftaufwendung in radialer oder axialer Richtung zu dem Einsatzgehäuse abbrechbar ist.

Vorteilhafte Ausgestaltungen der Erfindung ergeben sich aus den Unteransprüchen.

In der Zeichnung sind Ausführungsbeispiele des erfindungsgemäßen Gerätes im Schema dargestellt, und zwar zeigen
Figur 1 ein elektrisches Gerät in Form eines Nockenschalters in eingebautem Zustand mit Vertikalschnitt durch die Montageplatte,
Figur 2 eine Draufsicht gemäß Pfeil II in Figur 1,
Figur 3 eine Seitenansicht eines ausgebauten Gerätevorsatzes zu den Figuren 1 und 2 in vergrößertem Maßstab,
Figur 4 eine Einzelheit zu Figur 3 mit Darstellung einer aufgebrachten Dichtung,
Figur 5 eine vereinfachte Frontansicht in Richtung des Pfeiles V in Figur 4 und
Figur 6, 7, 8 und 9 verschiedene Ausführungsbeispiele der Rippe in stark vergrößertem Maßstab.

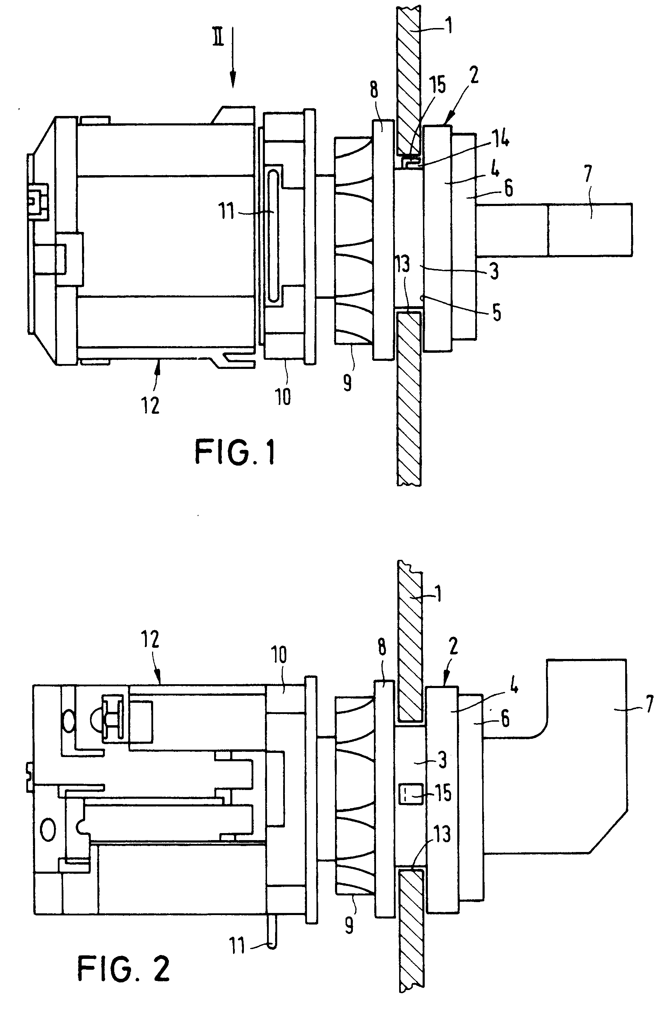

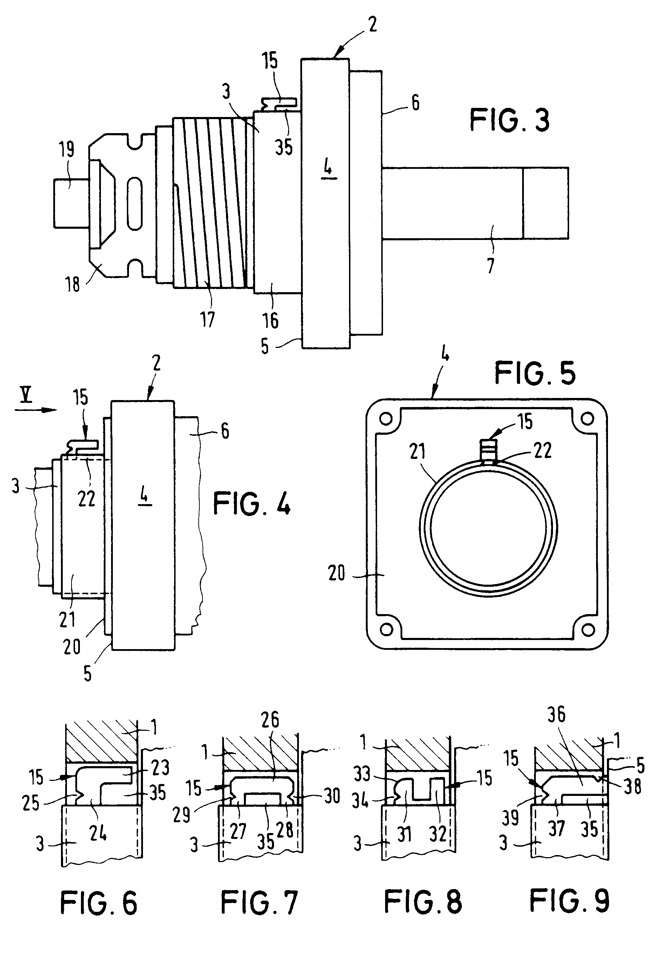

Die Figuren 1 und 2 veranschaulichen ein Ausführungsbeispiel eines elektrischen Gerätes in Form eines Nockenschalters, der in einer Bohrung bzw. einem Loch 13 in einer Montageplatte 1 eingesetzt und gehalten ist. Das in Figur 3 noch deutlicher dargestellte Einsatzgehäuse 2 weist einen zylindrischen Teil 3 auf, der in der Bohrung 13 zu liegen kommt. An der Außenfläche der Montageplatte liegt ein Flansch 4 mit einer Anschlagfläche 5 an. Auf der Vorderseite der Montageplatte schließt sich ein Betätigungsteil 6 mit einem Betätigungsgriff 7 an. Wenn es sich bei dem elektrischen Gerät nicht um einen Nockenschalter, sondern beispielsweise um einen Druckknopfschalter handelt, so ist der drehbare Betätigungsgriff 7 nicht vorhanden und das Betätigungsteil 6 als Druckknopf ausgebildet. Entsprechendes gilt für andere Befehls- und Meldegeräte. Auf der Rückseite der Montageplatte ist unter Zwischenschaltung eines vergrößert gezeichneten Gummiringes 8 eine Klemmschraubenmutter 9 auf dem Gewinde 17 (Figur 3) aufgeschraubt. Es schließt sich bei diesem Ausführungsbeispiel eine Kupplungsplatte 10 mit einem Verriegelungsteil 11 an. Schließlich ist hiermit das eigentliche elektrische Gerät 12, zum Beispiel das Schaltteil des Nockenschalters, verbunden.

Bei diesem Ausführungsbeispiel ist an der obersten Stelle des Randes der Bohrung bzw. des Loches 13 eine Nut 14 in der Montageplatte vorgesehen, in welche eine nachfolgend noch im einzelnen erläuterte Rippe 15 eingreift, die an der obersten Stelle der zylindrischen Gehäuseaußenfläche 16 (Figur 3) einstückig angeformt ist. Figur 3 zeigt noch ein Anschlußteil 18, aus dem ein Vierkantschaft 19 herausragt, der mit dem eigentlichen Schalterteil 12 des elektrischen Gerätes zusammenwirkt.

Die Figuren 4 und 5 zeigen eine besondere Ausgestaltung einer Dichtung. Diese Dichtung weist eine Dichtungsplatte 20 aus gummiartigem Material auf, die auf der Anschlagfläche 5 des Flansches 4 des Einsatzgehäuses 2 aufliegt. Die Dichtungsplatte 20 besitzt ein dem benachbarten zylindrischen Teil 3 des Einsatzgehäuses 2 entsprechendes Loch, an dessen Rand sich einstückig ein zylindrisches Dichtungsteil 21 anschließt, welches das zylindrische Gehäuseteil 3 fest aufgespannt umgibt. Die Lange des zylindrischen Dichtungsteils 21 entspricht im wesentlichen der Dicke der Montageplatte 1. Das zylindrische Dichtungsteil 21 weist eine Ausnehmung 22 für den Durchtritt der Rippe 15 auf. Die Ausnehmung 22 ist so gestaltet, daß das zylindrische Dichtungsteil 21 auch nach dem nachfolgend erläuterten Abbrechen der Rippe 15 auch an dieser Stelle eine genügende Abdichtung gewährleistet. Die Außenfläche des zylindrischen Dichtungsteils 21 kann vorteilhaft mit einer Anzahl zusammendrückbarer Noppen versehen sein, die die Haftung innerhalb der Bohrung 13 verbessern.

Figur 6 zeigt in stark vergrößertem Maßstab ein bevorzugtes Ausführungsbeispiel der Rippe 15, und zwar weist diese eine L-Form auf. Der eine beim Einsatz vorn liegende L-Schenkel 24 ist mit dem zylindrischen Teil 3 des Einsatzgehäuses 2 einstückig verbunden. Der andere L-Schenkel 23 verläuft unter Freilassen eines schmalen Spaltes 35 achsparallel zu dem Teil 3 des Einsatzgehäuses 2. Der wesentliche Vorteil dieser Ausgestaltung der Rippe 15, daß der größte Teil der beiden Schenkel 23, 24 der Rippe 15 bei Kraftaufwendung in radialer oder axialer Richtung zu dem Einsatzgehäuse abbrechbar ist, weil durch diese Gestaltungsweise eine Sollbruchstelle entsteht. Ohne die vorerläuterte Gummidichtung 20, 21 entfernen zu müssen, kann man zum Beispiel durch Einschieben eines einfachen Werkzeuge in den Spalt 35 und durch Drehen dieses Werkzeuges eine Kraft in radialer Richtung nach außen erzeugen, die dann ein Abbrechen bewirkt. Das Abbrechen kann man auch durch Druck von außen in radialer Richtung nach innen oder je nach Gestaltungsweise der Rippe durch Kraftaufwendung in axialer Richtung bewirken. Wie man aus Figur 6 im Zusammenhalt mit Figur 2 erkennt, hat der L-Schenkel 24 in tangentialer Richtung zu dem Gehäuseteil 3 eine solche Breite, daß eine große Scherfestigkeit und damit Drehsicherheit gewährleistet ist. Man kann die Sollbruchstelle dadurch verbessern und örtlich genauer bestimmen, daß der L-Schenkel 24 eine tangential zu dem zylindrischen Teil 2 des Einsatzgehäuses verlaufende Kerbe 25 erhält, welche mit kleinem Abstand von der Gehäuseaußenfläche 17 vorgesehen ist. Die Scherfestigkeit in tangentialer Richtung wird dadurch praktisch nicht vermindert. Unter dem Begriff tangential wird die Richtung senkrecht zur Bildebene der Figur 6 sowie der nachfolgenden Figuren 7 bis 9 verstanden.

Figur 7 veranschaulicht ein anderes Ausführungsbeispiel der Rippe 15, die hier als U-förmiger Bügel 26 ausgebildet und mit den Schenkeln 27, 28 einstückig mit dem zylindrischen Teil 3 des Einsatzgehäuses 2 verbunden ist. Zweckmäßigerweise erhalten die beiden Schenkel 27 und 28 je eine tangential verlaufende Kerbe 29 bzw. 30. Auch hier ist wieder ein Spalt 35 vorhanden.

Figur 8 zeigt ein weiteres Ausführungsbeispiel, bei dem die Rippe 15 zwei radiale und in achsparalleler Richtung mit Abstand voneinander angeordnete Vorsprünge 31 und 32 aufweist. Die Vorsprünge ergeben auf Grund ihrer ungeschwächten Breite eine große Scherfestigkeit in tangentialer Richtung, lassen sich aber bei Kraftanwendung in den anderen Richtungen leicht einzeln nacheinander abbrechen. Zur Erleichterung der Montage beim Einführen in eine Nut weist der beim Einbau vorn liegende Vorsprung 31 eine vordere Abrundung 33 auf. Vorteilhafterweise können auch diese Vorsprünge 31 und 32 mit einer tangential verlaufenden Kerbe 34 versehen sein.

Figur 9 zeigt ein Ausführungsbeispiel, bei dem das Ende des achsparallel verlaufenden L-Schenkels 36 einstückig mit der außen an der Montageplatte 1 anliegenden Anschlagfläche 5 des Flansches 4 des Einsatzgehäuses 2 verbunden ist. Die beiden Schenkel 36 und 37 können wieder vorteilhafterweise zur genaueren Definition der Sollbruchstellen mit Kerben 38, 39 versehen sein, die wieder tangential, also senkrecht zur Bildebene der Figur 9 verlaufen.

## Patentansprüche

1. Elektrisches Gerät (12), insbesondere Befehls- oder Meldegerät, welches zur Befestigung an einer mit einer Bohrung (13) versehenen Montageplatte (1) bestimmt ist, wobei das zylindrische Einsatzgehäuse (3) des Gerätes (12) auf dem Umfang eine Rippe (15) mit mindestens einer Sollbruchstelle (25) nahe der Gehäuseoberfläche (16) aufweist, so daß zum wahlweisen Einsatz des Gerätes (12) in eine Bohrung (13), die am Rande mit einer Nut (14) versehen ist, die Rippe (15) in die Nut (14) eingreift oder bei Einsatz in eine Bohrung, die keine Nut aufweist, die Rippe (15) an der Sollbruchstelle (25) abbrechbar ist, dadurch gekennzeichnet, daß die Rippe (15) wenigstens aus einem einstückig mit dem zylindrischen Einsatzgehäuse (3) verbundenen Schenkel (23, 24) besteht, der aus dem Umfang des Einsatzgehäuses (3) radial nach außen ausragt, daß die Breite des Schenkels (23, 24) in tangentialer Richtung groß genug ist, um eine ausreichende Scherfestigkeit und damit Drehsicherheit zu erzielen, und daß die Dicke des Schenkels (23, 24) in axialer Richtung im Bereich der Sollbruchstelle (25) viel kleiner als seine Breite in tangentialer Richtung ist, so daß die Rippe (15) bei Kraftaufwendung in radialer oder axialer Richtung zu dem Einsatzgehäuse (2, 3) abbrechbar ist.

2. Elektrisches Gerät nach Anspruch 1, dadurch gekennzeichnet, daß der Schenkel (23, 24) L-Form aufweist, daß das eine beim Einsatz vorn liegende Schenkelteil (24) mit dem Einsatzgehäuse (3) einstückig verbunden ist und das andere Schenkelteil (23) unter Freilassen eines Spaltes (35) achsparallel zu dem Einsatzgehäuse (3) verläuft.

3. Elektrisches Gerät nach Anspruch 2, dadurch gekennzeichnet, daß das mit dem Einsatzgehäuse (3) verbundene Schenkelteil (24) eine tangential verlaufende Kerbe (25) als Sollbruchstelle aufweist.

4. Elektrisches Gerät nach Anspruch 1, dadurch gekennzeichnet, daß die Rippe (15) zwei radiale und in achsparalleler Richtung mit Abstand voneinander angeordnete Vorsprünge (31, 32) aufweist, daß der beim Einbau vorn liegende Vorsprung (31) eine vordere Abrundung (33) aufweist und daß mindestens ein Vorsprung (31, 32) mit einer tangential verlaufenden Kerbe (34) versehen ist.

5. Elektrisches Gerät nach Anspruch 1, dadurch gekennzeichnet, daß die Rippe (15) als U-förmiger Bügel (26) ausgebildet und mit den Schenkeln (27, 28) einstückig mit dem Einsatzgehäuse (3) verbunden ist, und daß die beiden Schenkel (27, 28) je eine tangential verlaufende Kerbe (29, 30) aufweisen.

6. Elektrisches Gerät nach Anspruch 2, dadurch gekennzeichnet, daß das Ende des achsparallel verlaufenden Schenkelteils (36) einstückig mit der außen an der Montageplatte (1) anliegenden Anschlagfläche (5) des Einsatzgehäuses (2, 4) verbunden ist und nahe dieser Anschlagfläche (5) mit einer tangential verlaufenden Kerbe (38) versehen ist.

7. Elektrisches Gerät nach Anspruch 2, 5 oder 6, dadurch gekennzeichnet, daß der Spalt (35) so bemessen ist, daß die Spitze eines Schraubendrehers einschiebbar ist.

8. Elektrisches Gerät nach einem der vorhergehenden Ansprüche, dadurch gekennzeichnet, daß auf der Anschlagfläche (5) des Einsatzgehäuses (2, 4) eine Dichtungsplatte (20) aus gummiartigem Material aufliegt, die ein dem benachbarten zylindrischen Teil (3) des Einsatzgehäuses (2) entsprechendes Loch aufweist, an dessen Rand sich einstückig ein zylindrisches Dichtungsteil (21) anschließt, dessen Länge im wesentlichen der Dicke der Montageplatte (1) entspricht und daß in diesem zylindrischen Dichtungsteil (21) eine Ausnehmung (22) für den Durchtritt der Rippe (15) vorgesehen ist.

## Claims

1. Electrical device (12), in particular control or signalling device, which is intended for fastening to a mounting plate (1) provided with a bore (13), the cylindrical insert housing (3) of the device (12) comprising on its periphery a rib (15) with at least one predetermined breaking point (25) close to the housing surface (16), so that for the optional insertion of the device (12) in a bore (13), which is provided at the edge with a groove (14), the rib (15) engages in the groove (14) or upon insertion in a bore, which has no groove, the rib (15) can be broken off at the predetermined breaking point (25), characterised in that the rib (15) consists of at least one leg (23, 24) connected in one piece to the cylindrical insert housing (3), which leg projects radially outwards from the periphery of the insert housing (3), that the width of the leg (23, 24) in the tangential direction is sufficiently great to achieve an adequate shearing strength and thus torsional security, and that the thickness of the leg (23, 24) in the axial direction in the region of the predetermined breaking point (25) is much smaller than its width in the tangential direction, so that upon the application of force in the radial or axial direction to the insert housing (2, 3), the rib (15) can be broken off.

2. Electrical device according to Claim 1, characterised in that the leg (23, 24) has a L-shape, that the one leg part (24) located at the front at the time of insertion is connected in one piece to the insert housing (3) and the other leg part (23) extends axis parallel to the insert housing (3) leaving a gap (35) therebetween.

3. Electrical device according to Claim 2, characterised in that the leg part (24) connected to the insert housing (3) comprises a tangentially extending notch (25) as the predetermined breaking point.

4. Electrical device according to Claim 1, characterised in that the rib (15) comprises two radial projections (31, 32) arranged at a distance apart in an axis parallel direction, that the projection (31) located at the front at the time of installation comprises a front rounded portion (33) and that at least one projection (31, 32) is provided with a tangentially extending notch (34).

5. Electrical device according to Claim 1, characterised in that the rib (15) is constructed as a U-shaped bow (26) and is connected by the legs (27, 28) in one piece to the insert housing (3), and that the two legs (27, 28) respectively comprise a tangentially extending notch (29, 30).

6. Electrical device according to Claim 2, characterised in that the end of the leg part (36) extending in an axis parallel manner is connected in one piece to the stop face (5) of the insert housing (2, 4) bearing externally against the mounting plate (1) and close to this stop face (5) is provided with a tangentially extending notch (38).

7. Electrical device according to Claim 2, 5 or 6, characterised in that the gap (35) is dimensioned such that the tip of a screwdriver can be inserted.

8. Electrical device according to one of the preceding Claims, characterised in that resting on the stop face (5) of the insert housing (2, 4) is a sealing plate (20) of rubberlike material, which comprises a hole corresponding to the adjacent cylindrical part (3) of the insert housing (2), adjoining the edge of which, in one piece, is a cylindrical sealing part (21), whereof the length corresponds essentially to the thickness of the mounting plate (1) and that provided in this cylindrical sealing part (21) is a recess (22) for the passage of the rib (15).

## Revendications

1. Appareil électrique (12), notamment appareil de transmission d'instructions ou de signalisation, qui est destiné à être fixé sur une plaque de montage (1) pourvue d'un perçage (13), et dans lequel le boîtier cylindrique d'insertion (3) de l'appareil (12) possède, sur son pourtour, une nervure (15) possédant au moins un point de rupture imposée (25) à proximité de la surface (16) du boîtier de sorte que pour l'insertion au choix de l'appareil (12) dans un perçage (13), qui est pourvu d'une gorge (14) au niveau de son bord, la nervure (15) s'engage dans la gorge (14) ou, lors de l'insertion dans un perçage qui ne possède aucune gorge, la nervure (15) peut être rompue au niveau du point de rupture imposée (25), caractérisé en ce que la nervure (15) est constituée par au moins une branche (23, 24) qui est reliée d'un seul tenant au boîtier d'insertion cylindrique (3) et qui fait saillie radialement vers l'extérieur à partir de la périphérie du boîtier d'insertion (3), que la largeur de la branche (23, 24) est suffisamment importante dans la direction tangentielle pour l'obtention d'une résistance suffisante au cisaillement et par conséquent pour un blocage en rotation suffisant, et que l'épaisseur de la branche (23, 24) dans la direction axiale dans la zone du point de rupture imposée (25) est nettement inférieure à la largeur de la branche dans la direction tangentielle, de sorte que la nervure (15) peut se rompre lors de l'application d'une force dans la direction radiale ou axiale par rapport au boîtier d'insertion (2, 3).

2. Appareil électrique selon la revendication 1, caractérisé en ce que la branche (23, 24) possède la forme de L, qu'une partie (24) de la branche, qui est située en avant lors de l'insertion, est reliée d'un seul tenant au boîtier d'insertion (3) et que l'autre partie (23) de la branche s'étend parallèlement à l'axe du boîtier d'insertion (23), en laissant subsister une fente (35).

3. Appareil électrique suivant la revendication 2, caractérisé en ce que la partie (24) de la branche, qui est reliée au boîtier d'insertion (3), possède une encoche tangentielle (25) en tant que point de rupture imposée.

4. Appareil électrique suivant la revendication 1, caractérisé en ce que la nervure (15) possède deux parties saillantes radiales (31, 32), qui sont situées à distance l'une de l'autre dans la direction parallèle à l'axe, que la partie saillante (31), qui est située en avant lors de l'insertion, possède un arrondi avant (33) et qu'au moins une partie saillante (31, 32) comporte une encoche tangentielle (34).

5. Appareil électrique suivant la revendication 1, caractérisé en ce que la nervure (15) est réalisée sous la forme d'un étrier (26) en forme de U et est reliée d'un seul tenant, au moyen des branches (27, 28), au boîtier d'insertion (3) et que les deux branches (27, 28) possèdent chacune une encoche tangentielle (29, 30).

6. Appareil électrique suivant la revendication 2, caractérisé en ce que l'extrémité de la partie (36) de la branche, qui est parallèle à l'axe, est réunie d'un seul tenant à la surface de butée (5), qui s'applique extérieurement contre la plaque de montage (1), du boîtier d'insertion (2, 4) et comporte, à proximité de cette surface de butée (5), une encoche tangentielle (38).

7. Appareil électrique suivant la revendication 2, 5 ou 6, caractérisé en ce que la fente (35) est dimensionnée de telle sorte qu'on peut y introduire la pointe d'un tournevis.

8. Appareil électrique suivant l'une des revendications précédentes, caractérisé en ce que sur la surface de butée (5) du boîtier d'insertion (2, 4) est appliquée une plaque d'étanchéité (20) réalisée en un matériau semblable au caoutchouc et qui possède un trou qui correspond à la partie cylindrique voisine (3) du boîtier d'insertion (2) et au bord duquel se raccorde, d'un seul tenant, un élément cylindrique d'étanchéité (21), dont la longueur correspond essentiellement à l'épaisseur de la plaque de montage (1) et qu'un évidement (22) permettant le passage de la nervure (15) est prévu dans cet élément cylindrique d'étanchéité (21).
